# EUROPÄISCHE PATENTSCHRIFT

(11) **EP 1 650 978 B1**
(45) Veröffentlichungstag und Bekanntmachung des Hinweises auf die Patenterteilung: **16.06.2010**
(21) Anmeldenummer: 05022687.7
(22) Anmeldetag: 18.10.2005
(51) Int. Cl.: H04N 7/46, H04N 9/64

(54) **Verfahren zur Bilddarstellung unter Verwendung einer sequentiellen Farbdarstellung**
Method for displaying an image by means of a sequential display of colours
Méthode d'affichage d'images utilisant l'affichage séquentiel en couleurs

(30) Priorität: 20.10.2004 DE 102004051161
(43) Veröffentlichungstag der Anmeldung: 26.04.2006
(73) Patentinhaber: Trident Microsystems (Far East) Ltd., Grand Cayman (KY)
(72) Erfinder: Hahn, Marko, 85579 München (DE); Scheffler, Günter, 80939 München (DE); Tuschen, Christian, 80687 München (DE); Rieder, Peter, Dr., 81737 München (DE); Schu, Markus, 85435 Erding (DE)
(74) Vertreter: Epping - Hermann - Fischer

(56) Entgegenhaltungen:
- WO-A-01/10131
- WO-A-2004/032523
- WO-A-2004/073314
- US-B1- 6 456 340
- HAAN DE G ET AL: "IC FOR MOTION-COMPENSATED 100 HZ TV WITH NATURAL-MOTION MOVIE-MODE" IEEE TRANSACTIONS ON CONSUMER ELECTRONICS, IEEE INC. NEW YORK, US, Bd. 42, Nr. 2, 1. Mai 1996 (1996-05-01), Seiten 165-174, XP000596762 ISSN: 0098-3063

## Beschreibung

Die vorliegende Erfindung betrifft ein Verfahren und eine Vorrichtung zur Bilddarstellung unter Verwendung einer sequentiellen Farbdarstellung.

Bei einer Bilddarstellung mit sequentieller Farbdarstellung werden unterschiedliche Farbanteile des Bildes nicht gleichzeitig, sondern zeitlich aufeinanderfolgend dargestellt, wobei die Geschwindigkeit, mit der die einzelnen Farbanteile aufeinanderfolgen, so hoch ist, dass das menschliche Auge die einzelnen Farbanteile zu einem farbigen Bild "aufintegriert".

Vorrichtungen, die eine solche sequentielle Farbdarstellung nutzen; sind beispielsweise sogenannte DLP-Projektoren (DLP = Digital Light Processing). Derartige Projektoren besitzen in hinlänglich bekannter Weise einen sogenannten DLP-Chip der eine Matrix mit einer Vielzahl einzeln ansteuerbarer Spiegel aufweist. Der DLP-Chip dient zur Reflexion eines Lichtstrahls, der von dem Chip über eine Optik auf eine Projektionsfläche projiziert wird. Die einzelnen Spiegel reflektieren dabei abhängig von ihrer Stellung jeweils einen Teil des einfallenden Strahls in Richtung der Projektionsfläche oder von der Projektionsfläche weg. Der DLP-Chip wird durch ein Bildsignal angesteuert, wobei durch die separate Ansteuerung der einzelnen Spiegel ein Hell-Dunkel-Muster auf den von dem Chip reflektierten Lichtstrahl abgebildet wird, das dem Hell-Dunkel-Muster des darzustellenden Bildes entspricht. Helligkeitsabstufungen können dadurch erreicht werden, dass die einzelnen Spiegel zwischen den Stellungen oszillieren, bei denen der Lichtstrahl in Richtung der Projektionsfläche oder von der Projektionsfläche weg reflektiert wird.

Zur optimalen Darstellung eines Farbbildes werden bei solchen Projektoren drei DLP-Chips benötigt, von denen jeweils einer zur Reflexion von Licht in einer der drei Grundfarben: Rot, Grün, Blau dient und die jeweils durch ein Bildsignal angesteuert sind, das die Bildanteile mit jeweils einer dieser Farben repräsentiert. Die von den einzelnen Chips erzeugten einfarbigen Bilder werden dann mittels eines Prismas zu einem mehrfarbigen Bild überlagert.

Aus Kostengründen wird in DLP-Projektoren vielfach jedoch nur ein DLP-Chip eingesetzt. Die Darstellung eines Farbbildes kann dabei durch sequentielle Farbdarstellung in folgender Weise erzeugt werden:
Ein Farbrad, das partiell für rote, grüne und blaue Anteile einer Lichtquelle durchlässig ist, wird zwischen die Lichtquelle und den DLP-Chip eingebracht, und so bewegt, dass zyklisch rotes, grünes und blaues Licht von dem DLP-Chip reflektiert wird. Synchronisiert zu der Bewegung des Farbrades wird der DLP-Chip durch Bildsignale angesteuert, die jeweils den roten, blauen und grünen Anteil des darzustellenden Bildes repräsentieren, so dass zeitlich aufeinanderfolgend ein rotes, grünes und blaues Bild erzeugt werden, die bedingt durch die menschliche Sehphysiologie zu einem Bild aufintegriert werden.

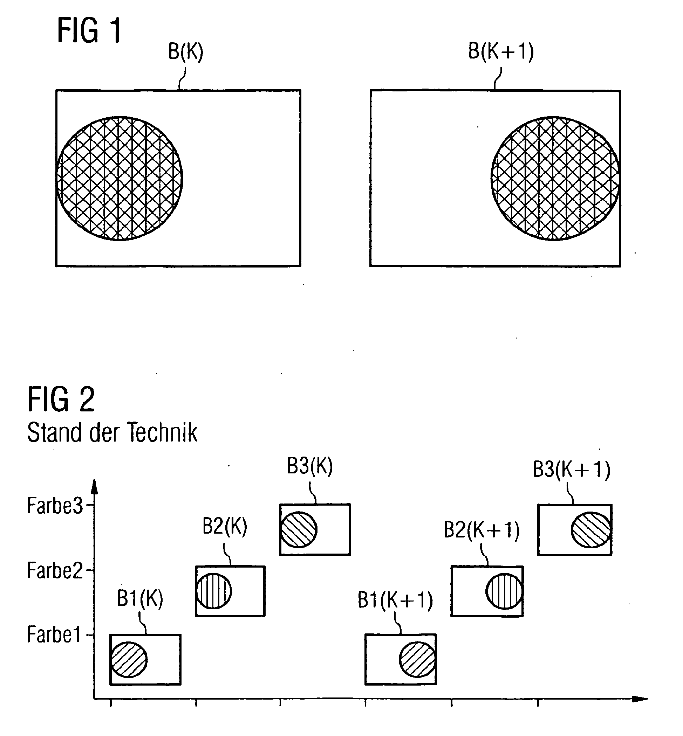

Die grundsätzliche Vorgehensweise für eine Bilddarstellung mit sequentieller Darstellung einzelner Farbanteile wird nachfolgend anhand der Figuren 1 und 2 erläutert.

Figur 1 zeigt zwei zeitlich aufeinanderfolgende Bilder B(k), B(k+1) einer darzustellenden Bildfolge. Die in dem Beispiel dargestellten Bilder zeigen ein Objekt 10, das sich in den aufeinanderfolgen Bildern an unterschiedlichen Positionen befindet, d.h. an einer ersten Bildposition in dem ersten Bild B(k) und an einer von der ersten Bildposition abweichenden zweiten Position in dem zweiten Bild B(k+1). Bei ausreichend hoher Bildfrequenz entsteht hierdurch der Eindruck eines sich bewegenden Objekts.

Es sei angenommen, dass das sich bewegende Objekt 10 ein farbiges Objekt ist, das Farbanteile aller drei Grundfarben umfasst, wobei die Intensität der einzelnen Farbanteile unterschiedlich sein kann. Eine Darstellung dieses Objekts unter Anwendung einer sequentiellen Farbdarstellung ist schematisch in Figur 2 veranschaulicht. Es sei angenommen, die Bildfrequenz der Bildfolge mit den Bildern B(k), B(k+1) sei f=1/T, wobei T die den zeitlichen Abstand zwischen dem Beginn der Darstellung eines Bildes und dem Beginn der Darstellung eines nachfolgenden Bildes bezeichnet. Innerhalb dieser Zeitdauer T werden zur Darstellung eines der Bilder B(k), B(k+1) der Bildfolge zeitlich aufeinanderfolgend wenigstens drei Teilbilder B1(k), B2(k), B3 (k) bzw. B1(k+1), B2 (k+1), B3 (k+1) dargestellt, von den ein erstes Teilbild das Objekt nur in einer ersten Farbe, beispielsweise in rot, ein zweites Teilbild das Objekt nur in einer zweiten Farbe, beispielsweise in grün und ein Drittes das Objekt nur in einer dritten Farbe, beispielsweise in blau, zeigt. Die Farbintensität der einfarbigen Bilder entspricht dabei der Farbintensität, mit der der jeweilige Farbanteil in der Farbe des Objekts vorhanden ist.

Das menschliche Auge "mischt" diese drei sequentiell dargestellten Teilbilder dann zu einem Bild, das das farbige Objekt an der jeweiligen Bildposition aufweist.

Bei der Darstellung von Bewegungsabläufen, d.h. bei der Darstellung von Objekten, deren Bildposition sich von Bild zu Bild der Bildfolge ändert, kann für den Betrachter selbst bei einfarbigen Objekten der Eindruck entstehen, es seien "Farbsäume" an den Rändern der sich bewegenden Objekte vorhanden. Diese Farbsäume bezeichnet sind dabei an den Rändern des Objekts, die senkrecht zu der Bewegungsrichtung liegen, besonders ausgeprägt; man spricht in diesem Zusammenhang von einer Falschfarbendarstellung. Dieser Eindruck entsteht für den Benutzer obwohl das Objekt in den aufeinanderfolgenden einfarbigen Teilbildern, die zur Darstellung eines Bildes erzeugt werden, an derselben Stelle in dem Bild dargestellt wird.

Die WO 2004/073314 A1 und WO 01/10131 A1 beschreiben jeweils ein Verfahren zur Darstellung einer Bildfolge mit sequentieller Farbdarstellung. Bei diesen Verfahren wird wenigstens eine der sequentiell darzustellenden einfarbigen Teilbildfolge einer Bewegungsschätzung unterzogen, um eine bewegungskornpensierte einfarbige Teilbildfolge zur Verfügung zu stellen, die sequentiell zu den beiden anderen einfarbigen Teilbildfolgen dargestellt wird.

Die US 6,456,340 B1 beschreibt eine Bildverarbeitungsvorrichtung, die dazu ausgebildet ist, geometrische Transformationen auf Bilddaten anzuwenden. Diese geometrischen Transformatiokönnen eine bewegungskompensierte Änderung der Bildfrequenz (frame rate conversion) umfassen.

Ziel der vorliegenden Erfindung ist es, ein Verfahren zur Darstellung einer Bildfolge unter Anwendung einer sequentiellen Farbdarstellung zur Verfügung zu stellen, bei der für den Betrachter der Eindruck einer Falschfarbendarstellung vermieden oder zumindest reduziert ist.

Dieses Ziel wird durch ein Verfahren nach Anspruch 1 gelöst. Vorteilhafte Ausgestaltungen der Erfindung sind Gegenstand der Unteransprüche.

Bei dem erfindurigsgemäßen Verfahren zur Bilddarstellung einer Bildfolge unter Verwendung einer sequentiellen Farbdarstellung, bei dem ein einzelnes Bild also durch zeitlich aufeinanderfolgende Darstellung von einfarbigen Teilbildern dargestellt wird, ist vorgesehen, dass die Teilbildfolge, bewegungskompensiert ist. Unter "Teilbildfolge" ist dabei die zeitliche Abfolge einfarbiger Teilbilder zu verstehen, wobei die Farbe zeitlich aufeinanderfolgender Teilbilder sich zyklisch ändert.

Bei der Darstellung eines sich bewegenden Objekts bei Bilddarstellungsverfahren mit sequentieller Farbdarstellung, dürften theoretisch an den Rändern des Objekts keine Farbsäume vorhanden sein, da das Objekt in den einzelnen Teilbildern, die zur Darstellung eines Bildes erzeugt werden, "deckungsgleich" an derselben Stelle dargestellt wird. Der Erfindung liegt die Erkenntnis zugrunde, dass diese von einem Betrachter wahrgenommenen Farbsäume durch die Sehphysiologie des Menschen verursacht sind. Die menschliche Wahrnehmung erkennt eine kontinuierliche Bewegung eines Objekts in einer Bildfolge dann, wenn die Bildfrequenz oberhalb etwa 60 Hz liegt. Bei Bildern mit bewegtem Inhalt folgt die Wahrnehmung dabei einer gedachten Verbindungslinie zwischen den Positionen des als bewegt dargestellten Objekts in den einzelnen Bildern. Bei sequentieller Farbdarstellung ist die Sehphysiologie dabei offensichtlich in der Lage, auch bei hohen Bildfrequenzen und entsprechend höheren Teilbildfrequenzen zu erkennen, dass die Darstellung eines Objekts durch zeitlich aufeinanderfolgende einfarbige Darstellungen des Objekts erfolgt.

Bei Darstellung eines statischen, d.h. nicht bewegten Objekts, werden die einzelnen, zeitlich aufeinanderfolgend dargestellten Farbanteile dabei so gemischt, dass diese sequentielle Farbdarstellung nicht wahrgenommen wird.

Bei Darstellung von sich bewegenden Objekten nimmt das Gehirn die Position des sich bewegenden Objekts in den zeitlich aufeinanderfolgenden einfarbigen Teilbildern vorweg und erwartet die Darstellung des einfarbigen Objekts in aufeinanderfolgenden Teilbildern an unterschiedlichen Positionen, die von der Bewegungsrichtung und der Bewegungsgeschwindigkeit des Objekts abhängig sind. Da die Position des Objekts in den Teilbildern, die zur Darstellung eines einzelnen Bildes zeitlich aufeinanderfolgend dargestellt werden, jedoch unverändert ist, entsteht der Eindruck eines Differenzbildes zwischen der erwarteten Darstellung und dem tatsächlich dargestellten Bild.

Diese vermeintliche Differenz zwischen der durch das menschliche Gehirn erwarteten Darstellung und der tatsächlichen Darstellung kann durch das erfindungsgemäße Verfahren vermieden werden, bei dem die Teilbildfolge bewegungskompensiert erzeugt und dargestellt wird.

Die bewegungskompensierte Teilbildfolge kann beispielsweise dadurch erzeugt werden, dass aus der darzustellenden Bildfolge eine bewegungskompensierte Bildfolge mit einer höheren Frequenz erzeugt wird, wobei diese höhere Frequenz der Frequenz entspricht, mit der die einzelnen einfarbigen Teilbilder zeitlich aufeinanderfolgend dargestellt werden. Aus dieser bewegungskompensierten Bildfolge wird anschließend die Teilbildfolge mit einfarbigen Teilbildern, deren Farbe zyklisch wechselt, erzeugt.

Darüber hinaus besteht auch die Möglichkeit, die darzustellende Bildfolge in drei einfarbige Teilbildfolgen aufzuspalten und aus diesen Teilbildfolgen bewegungskompensierte Teilbildfolgen zu erzeugen, aus denen die zur Darstellung gebrachte Teilbildfolge mit aufeinanderfolgenden Teilbildern, deren Farbe zyklisch wechselt, erzeugt wird.

Verfahren zur Erzeugung einer bewegungskompensierten Bildfolge aus einer vorhandenen Bildfolge, wobei die bewegungskompensierte Bildfolge eine höhere Bildfrequenz als die vorhandene Bildfolge aufweist, sind hinlänglich bekannt und werden deshalb nachfolgend nur bezüglich der grundsätzlichen Funktionsweise kurz erläutert.

Bei diesen Verfahren werden zu zwei aufeinanderfolgenden Bildern der vorhandenen Bildfolge Zwischenbilder interpoliert, wobei für die Zwischenbildinterpolation eine sogenannte Bewegungsschätzung durchgeführt wird, um sich bewegende Objekte in der Bildfolge zu identifizieren und deren "Bewegungsvektor" zu ermitteln. Solche Verfahren zur Bewegungsschätzung sind beispielsweise in Schröder, H.; Blume, H.: "Mehrdimensionale Signalverarbeitung", Band 2, Teubner Verlag, 2000, ISBN 3-519-06197-X, in Kapitel 8 beschrieben. In Kenntnis dieser Bewegungsinformation können Zwischenbilder interpoliert werden, die zeitlich an einer beliebigen Position zwischen zwei Bildern der vorhandenen Bildfolge liegen können und in denen als bewegt dargestellte Objekte an Positionen dargestellt werden, die von der zuvor ermittelten Bewegungsinformation und der zeitlichen Lage des Zwischenbildes zwischen den vorhandenen Bildern abhängig ist.

Liegt das Zwischenbild beispielsweise zeitlich in der Mitte zwischen zwei aufeinanderfolgenden Bildern der vorhandenen Bildfolge so wird ein Objekt, das sich in einem ersten Bild der vorhandenen Bildfolge an einer ersten Position und in einem nachfolgenden zweiten Bild an einer zweiten Position befindet, in dem Zwischenbild in der Mitte zwischen der ersten und zweiten Position dargestellt, um eine bewegungsrichtige Darstellung zu erhalten.

Verfahren zur Erzeugung einer bewegungskompensierten Bildfolge aus einer vorhandenen Bildfolge werden beispielsweise bei der sogenannten 100Hz Aufwärtskonversion (vgl. Schröder, Blume, a.a.O., Kapitel 9.4.2), bei der Bildfolgen mit einer Bildfrequenz von 50 Hz in eine Bildfolge mit einer Bildfrequenz von 100 Hz gewandelt werden, oder bei der Erzeugung von Bildfolgen mit "künstlicher Zeitlupe" angewendet.

Die vorliegende Erfindung wird nachfolgend anhand von Figuren näher erläutert.
- Figur 1: zeigt schematisch zwei zeitlich aufeinanderfolgende Bilder einer Bildfolge, die ein sich bewegendes Ob- jekt zeigen.
- Figur 2: veranschaulicht ein Verfahren nach dem Stand der Technik zur Darstellung der Bildfolge gemäß Figur 1 unter Verwendung einer sequentiellen Farbdarstel- lung.
- Figur 3: veranschaulicht ein erfindungsgemäßes Verfahren zur Darstellung der Bildfolge gemäß Figur 1 unter Ver- wendung einer sequentiellen Farbdarstellung.
- Figur 4: veranschaulicht die Positionen der einfarbig darge- stellten, sich überlagernden Objekte in jeweils ei- nem Bild.
- Figur 5: zeigt ein erstes Ausführungsbeispiel einer erfin- dungsgemäßen Vorrichtung zur Bilddarstellung, die eine Signalverarbeitungsvorrichtung und eine Anzei- gevorrichtung umfasst.
- Figur 6: zeigt ein Beispiel für die Anzeigevorrichtung der Vorrichtung gemäß Figur 5.
- Figur 7: veranschaulicht beispielhaft die in der Vorrichtung nach Figur 5 erzeugten Bildfolgen.
- Figur 8: zeigt ein weiteres Ausführungsbeispiel einer erfin- dungsgemäßen Vorrichtung.

In den Figuren bezeichnen, sofern nicht anders angegeben, gleiche Bezugszeichen gleiche Signale und Komponenten mit gleicher Bedeutung.

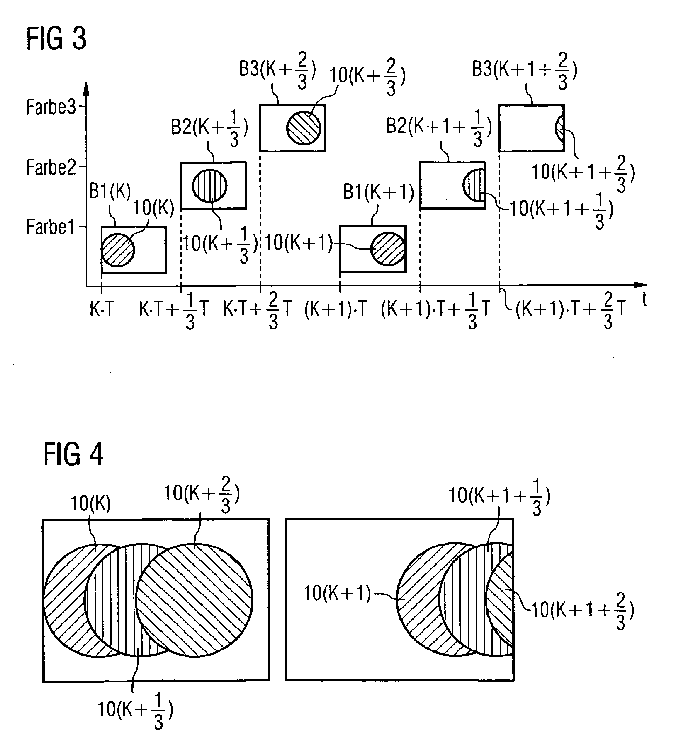

Figur 3 veranschaulicht die bei dem erfindungsgemäßen Verfahren erzeugte Teilbildfolge zur Darstellung der Bilder B(k), B(k+1) der Bildfolge gemäß Figur 1 bei Anwendung einer sequentiellen Farbdarstellung. In dem Beispiel wird davon ausgegangen, dass die einzelnen Bilder durch drei einfarbige Teilbilder, beispielsweise Teilbilder in den Farben Rot, Grün und Blau, darstellbar sind, so dass zur Darstellung eines Bildes zeitlich aufeinanderfolgend drei einfarbige Teilbilder dargestellt werden. Unmittelbar aufeinanderfolgende Teilbilder besitzen eine unterschiedliche Farbe, was in Figur 3 dadurch verdeutlicht ist, dass in der Darstellung gemäß Figur 3 unterschiedliche Darstellungsebenen in Richtung senkrecht zu der Zeitachse für die einzelnen Farben gewählt sind. Zur Kennzeichnung unterschiedlicher Farben in der Schwarz-Weiß-Darstellung in Figur 3 sind für die einzelnen Farben unterschiedliche Schraffuren gewählt.

Mit B1(.) sind in Figur 3 die Teilbilder der Teilbildfolge in der ersten Farbe, beispielsweise Rot, mit B2(.) sind die Teilbilder der zweiten Farbe, beispielsweise Blau, und mit B3(.) sind die Teilbilder der dritten Farbe, beispielsweise Grün, bezeichnet.

Bei dem erfindungsgemäßen Verfahren ist vorgesehen, dass die Teilbildfolge bewegungskompensiert ist, was gleichbedeutend damit ist, dass durch die Teilbildfolge dargestellte sich bewegende Objekte bewegungsrichtig bezogen auf die zeitliche Position des jeweiligen Teilbildes in der Teilbildfolge dargestellt sind. Die Position eines sich bewegenden Objektes, d.h. eines Objektes, das in einem ersten Bild B(k) der darzustellenden Bildfolge eine erste Position und in einem nachfolgenden zweiten Bild B(k+1) der Bildfolge eine von der ersten Position unterschiedliche zweite Position besitzt, ändert sich dabei von Teilbild zu Teilbild in Richtung der Bewegung.

In dem Beispiel gemäß Figur 1 verläuft die Bewegungsrichtung des Objekts 10 in horizontaler Richtung des Bildes vom linken zum rechten Bildrand. Entsprechend ändert sich die Position des Objekts in der Teilbildfolge von Teilbild zu Teilbild in Richtung des rechten Bildrandes. Die Teilbildfolge ist in dem dargestellten Beispiel so erzeugt, dass die Position des Objekts 10 in den Teilbildern B1(k), B1(k+1) der ersten Farbe der Position des Objekts in den Bildern B(k), B(k+1) der darzustellenden Bildfolge entspricht. Die zeitlich zwischen den Teilbildern B1(k), B1(k+1) der ersten Farbe liegenden Teilbilder B2(k), B3(k) bzw. B2 (k+1), B3 (k+1) der zweiten und dritten Farbe sind bewegungskompensiert interpolierte Teilbilder.

In Figur 4 ist der Inhalt der drei einfarbigen Teilbilder B1(k), B2(k+1/3), B3(k+2/3) bzw. B1(k+1), B2(k+1+1/3), B3(k+1+2/3), die zu einem Bild B(k) bzw. B(k+1) erzeugt werden überlagert in einem Bild dargestellt. Wie ersichtlich ist, decken sich die Konturen der jeweils einfarbigen Objekte der einzelnen Teilbilder aufgrund der Erzeugung einer bewegungskompensierten Teilbildfolge nicht, wobei mit 10(k)...10(k+1+2/3) die Objekte in den einzelnen Teilbildern der Teilbildfolge bezeichnet sind. Die Konturen der einfarbigen Objekte liegen vielmehr in Richtung der Bewegungsrichtung des Objekts versetzt zueinander. Dieser Versatz der Position der jeweils einfarbig dargestellten Objekte von Teilbild zu Teilbild führt unter Berücksichtigung der menschlichen Sehphysiologie jedoch dazu, dass das durch die Teilbildfolge dargestellte Objekt als Objekt in einer gleichmäßigen Farbe wahrgenommen wird, ohne dass störende Farbsäume an den Rändern des Objekts wahrgenommen werden. Die Farbe des Objekts ergibt sich dabei aus einer Mischung der Farben der Objekte in den drei einfarbigen Teilbildern.

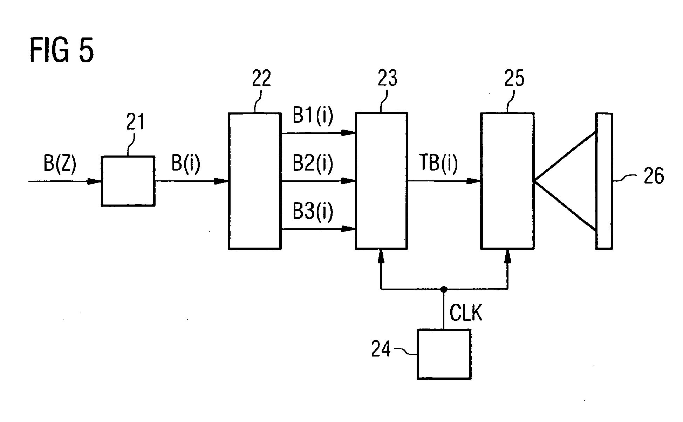

Figur 5 zeigt ein erstes Ausführungsbeispiel einer erfindungsgemäßen Vorrichtung zur Bilddarstellung mittels einer Teilbildfolge mit einfarbigen Teilbildern, deren Farbe zyklisch variiert. Mit B(z) ist in Figur 5 eine darzustellende Bildfolge bezeichnet, die eine herkömmliche Videobildfolge und zwar sowohl eine Halbbildfolge mit zeilenverkämmten Halbbildern als auch eine Vollbildfolge sein kann. Die Bildfrequenz, mit der einzelne Bilder dieser Bildfolge B(z) zur Verfügung stehen, beträgt f = 1/T.

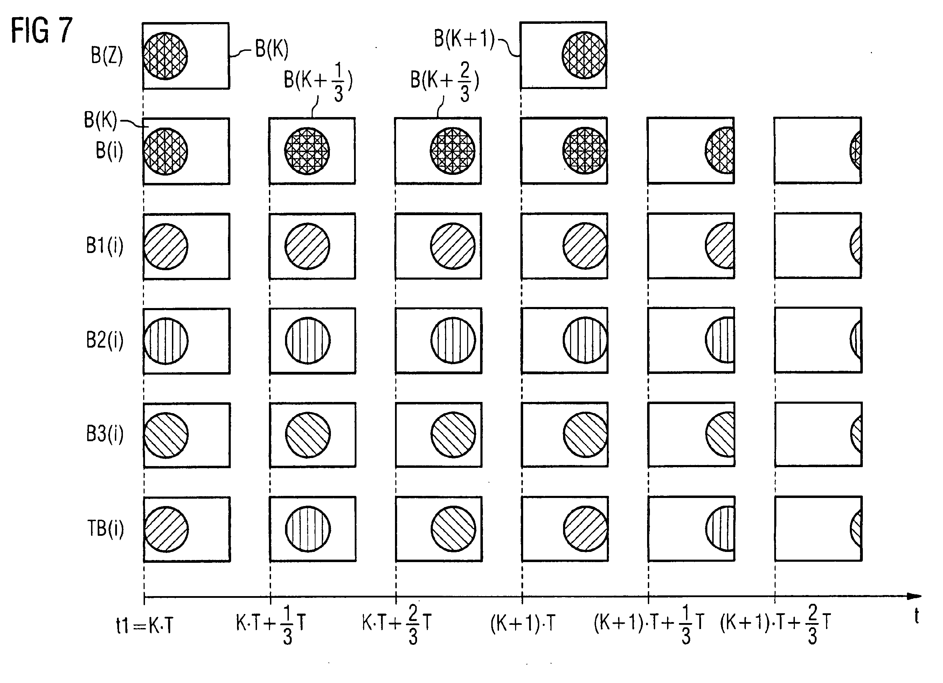

Zwei zeitlich aufeinanderfolgende Bilder B(k), B(k+1) dieser Bildfolge B(z), die in dem Beispiel den in Figur 1 dargestellten Bildern mit einem sich bewegenden runden Objekt entsprechen, sind in Figur 7 dargestellt. Mit t1=k·T ist dabei ein erster Zeitpunkt t1 bezeichnet, zu dem ein erstes Bild B(k) dieser Bildfolge zur Verfügung steht, und mit t2=(k+1)·T ist ein zweiter Zeitpunkt bezeichnet, zu dem das zweite Bild B(k+1) dieser Bildfolge zur Verfügung steht.

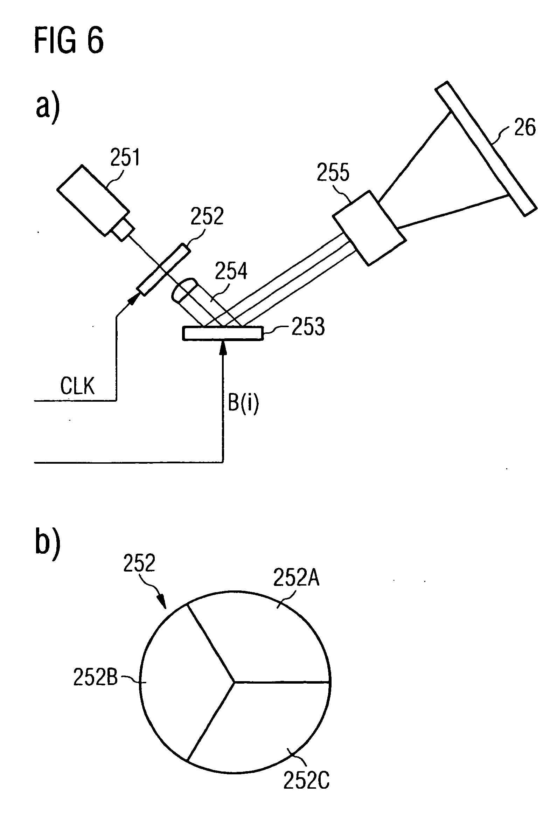

Die Eingangsbildfolge B(z) ist einer Interpolationsvorrichtung 21 zugeführt, die dazu ausgebildet ist, aus der Eingangsbildfolge B(z) durch bewegungskompensierte Zwischenbildinterpolation eine Bildfolge B(i) mit der dreifachen Bildfrequenz der Eingangsbildfolge B(z) zu erzeugen. Diese bewegungskompensierte Bildfolge B(i) ist in Figur 6 ebenfalls dargestellt.

Bezugnehmend auf Figur 7 ist diese Interpolationsvorrichtung 21 dazu ausgebildet, zu zwei zeitlich aufeinanderfolgenden Bildern B(k), B(k+1) der Eingangsbildfolge B(z) zwei Zwischenbilder B(k+1/3) und B(k+2/3) bewegungskompensiert zu erzeugen. Die Bildfolge B(i) umfasst somit die Bilder der Eingangsbildfolge B(z) sowie zu jedem Bild der Eingangsbildfolge zwei zusätzliche bewegungskompensierte Zwischenbilder. Die einzelnen Bilder dieser bewegungskompensierten Bildfolge B(i) sind vorzugsweise gleichmäßig zeitlich beabstandet, der zeitliche Abstand der beiden Zwischenbilder B(k+1/3), B(k+2/3) zu den Bildern B(k), B(1+1) der Eingangsbildfolge B(z) wird in hinlänglich bekannter Weise bei der Zwischenbildinterpolation berücksichtigt. Bezogen auf das dargestellte Beispiel, bei dem sich das Objekt in dem ersten Bild B(k) an einer ersten Position und in dem zweiten Bild B(k+1) an einer zweiten Position befindet, bedeutet dies, dass die Position des Objekts in dem ersten Zwischenbild B(k+1/3), das zu einem Zeitpunkt t1+1/3·T dargestellt wird, bezogen auf die Position in dem Bild B(k) um 1/3 des Abstandes zwischen der ersten und zweiten Bildposition versetzt ist. In dem weiteren interpolierten Zwischenbild B(k+2/3), das zu einem Zeitpunkt t1+2/3·T dargestellt wird, befindet sich das Objekt an einer Position, die bezogen auf die Position in dem Bild B(k) um 2/3 des Abstandes zwischen der ersten und zweiten Position in Richtung der Bewegung versetzt ist.

Vorrichtungen zur bewegungskompensierten Zwischenbildinterpolation entsprechend Vorrichtung 21 sind hinlänglich bekannt, so dass zum Aufbau und zur Funktionsweise dieser Vorrichtungen hier nicht näher Stellung genommen wird. Eine solche Vorrichtung ist beispielsweise in Schröder, Blume, a.a.O., Seiten 315-363 beschrieben.

Die bewegungskompensierte Bildfolge B(i) ist einer Filtervorrichtung 22 zugeführt, die die Bildfolge B(i) in einfarbige Bildfolgen B(i), B2(i), B3(i) aufspaltet. Aus diesen einfarbigen bewegungskompensierten Teilbildfolgen B1(i), B2(i), B3(i) wird durch eine Multiplexervorrichtung 23 die zur Darstellung zu bringende Teilbildfolge TB(i) gebildet, die jeweils zeitlich aufeinanderfolgend unterschiedlich farbige Teilbilder repräsentiert. Die Multiplexervorrichtung 23 ist dazu ausgebildet, im Takt eines Taktsignals CLK, dessen Frequenz der Frequenz der bewegungskompensierten Bildfolge B(i) entspricht, zyklisch eine der drei Teilbildfolgen B1(i), B2(i), B3(i) auf dessen Ausgang durchzuschalten, um die darzustellende Teilbildfolge B(i) zu erzeugen.

Diese Teilbildfolge TB(i) ist einer Anzeigevorrichtung 25 zugeführt, beispielsweise einem sogenannten DLP-Prozessor, der die durch die Teilbildfolge TB(i) repräsentierten Bilder auf eine Leinwand 26 projiziert.

Figur 6a zeigt schematisch einen solchen DLP-Projektor, der als zentrales Element einen DLP-Chip 253 aufweist, dem das Teilbildsignal TB(i) zugeführt ist, und der dazu ausgebildet ist, einen von einer Lichtquelle 251 gelieferten, und durch eine Optik 254 aufgeweiteten Lichtstrahl nach Maßgabe des Teilbildsignals TB(i) selektiv an seiner Oberfläche zu reflektieren, um einen reflektierten Lichtstrahl mit einem von dem Teilbildsignal TB(i) abhängigen Hell-Dunkel-Muster zu erzeugen. Dieser von dem DLP-Chip 253 reflektierte Lichtstrahl wird durch eine Projektionsvorrichtung 255 empfangen und auf die Leinwand 26 projiziert. Ein Farbrad 252, das in den Strahlengang zwischen die Lichtquelle 251 und den DLP-Chip 253 eingebracht ist, und das bezugnehmend auf Figur 6b drei verschiedene Farbfilterbereiche 252A, 252B, 252C besitzt, rotiert synchronisiert zu dem Taktsignal CLK. Hierdurch wird synchronisiert zu den durch das Teilbildsignal TB(i) repräsentierten Teilbildern, die jeweils nur die Bildinformation zu einem Farbanteil des Bildes enthalten, ein Lichtstrahl in dieser Farbe erzeugt, der durch den DLP-Chip reflektiert wird.

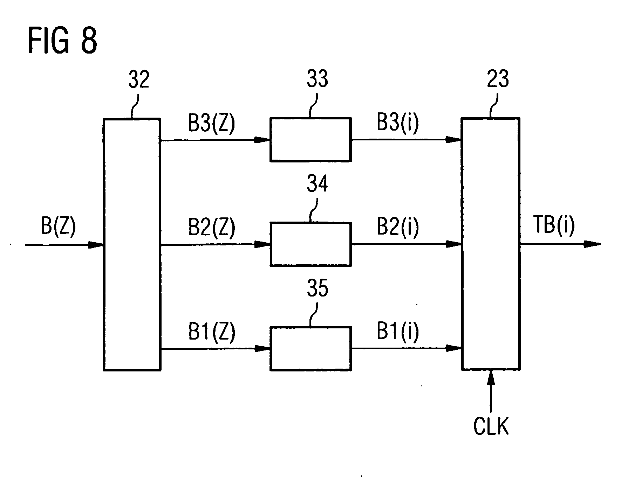

Bezugnehmend auf Figur 8 besteht auch die Möglichkeit, das eingehende Bildsignal B(z) durch ein den Filter 22 entsprechendes Filter 32 noch vor der Erzeugung einer bewegungskompensierten Bildfolge aufzuspalten, um drei Teilbildfolgen bzw. Teilbildsignale B1(z), B2(z), B3(z) zu erzeugen. Diese Vorrichtung umfasst drei Zwischenbildinterpolationsvorrichtungen, 33, 34, 35, die aus den einfarbigen Bildfolgen B1(z)... B3(z) bewegungskompensierte Teilbildfolgen B1(i)...B3(i) mit der dreifachen Frequenz der Eingangsbildfolge B(z) erzeugen. Diese Teilbildfolgen werden in der anhand von Figur 5 bereits erläuterten Weise der Multiplexervorrichtung 23 zugeführt und weiterverarbeitet.

In dem erläuterten Fall werden die zu verarbeitenden Teilbildfolgen somit erst in ihre Farbkomponenten zerlegt, bevor die Bewegungskompensation erfolgt. Anschließend werden die bewegungskompensierten Teilfarbbilder sequenziell zur Einrichtung zur Anzeigevorrichtung durchgeschaltet. Wie beschrieben muss die gerade durchgeschaltete Farbkomponente dabei dem gerade im optischen Strahlengang befindlichen Filter entsprechen.

Bei den Vorrichtungen gemäß der Figuren 5 und 8 werden jeweils mehr Teilbilder erzeugt, als für die Teilbildfolge TB(i), die letztendlich der Bilddarstellung dient, benötigt werden. Es sei darauf hingewiesen, dass die Zwischenbildinterpolatoren 33, 34 und 35 gemäß Figur 8 auch so ausgebildet sein können, dass diese aus den einfarbigen Teilbildfolgen B1(z)...B3(z) durch geeignete Zwischenbildinterpolation nur die einfarbigen Teilbilder erzeugen, die für die Teilbildfolge TB(i) benötigt werden.

Es sei angemerkt, dass die Frequenz der Bilddarstellung auch ein (gegebenenfalls nicht ganzzahliges) Vielfaches der Eingangsbildfrequenz sein. In diesem Fall dreht sich das Farbrad pro Eingangsbild mehr als einmal bzw. besitzt mehr als drei Unterteilungen.

### Bezugszeichenliste

- B(k), B(k+1): Bilder einer Bildfolge
- B1(.), B2(.), B3(.): Einfarbige Teilbildfolgen
- k: Zählvariable
- T: Bilddauer, Periodendauer
- 33-35: Zwischenbildinterpolationsvorrichtungen
- 252A-252C: Farbfilterabschnitte des Farbrades
- 10: durch eine Bildfolge dargestelltes, sich bewegendes Objekt
- 21: Zwischenbildinterpolationsvorrichtung
- 22: Filtervorrichtung
- 23: Multiplexervorrichtung
- 24: Synchronisationstaktgenerator
- 25: Anzeigevorrichtung
- 26: Schirm, Projektionswand
- 32: Filtervorrichtung
- 251: Lichtquelle
- 252: Farbrad
- 253: DLP-Chip
- 254: Optik, Linsenvorrichtung
- 255: Optik, Projektionsvorrichtung

## Patentansprüche

1. Verfahren zur Darstellung einer Bildfolge (B(z)), bei dem ein einzelnes Bild (B(k), B(k+1)) durch zeitlich aufeinanderfolgende Darstellung von einfarbigen Teilbildern (B1(k)...B3(k+1)) dargestellt wird, das folgende Verfahrensschritte aufweist:
- Erzeugen einer bewegungskompensierten Bildfolge (B(i)) mit einer höheren Bildfrequenz aus der darzustellenden Bildfolge (B(z)),
- Filtern der bewegungskompensierten Bildfolge (B(i)) mittels einer Farbfiltervorrichtung, um wenigstens drei jeweils einfarbige Teilbildfolgen (B1(i), B2(i), B3(i)) zu erhalten,
- Erzeugen der darzustellenden Teilbildfolge (TB(i)) aus den einzelnen Teilbildfolgen (B1(i), B2(i), B3(i)) durch zyklisches Auswählen von Bildern der Teilbildfolgen im Zeitmultiplexverfahren.

2. Verfahren nach Anspruch 1, bei dem die Bildfrequenz der bewegungskompensierten Bildfolge (B(i)) der n-fachen Frequenz der darzustellenden Bildfolge (B(z)) entspricht, wobei n die Anzahl der zur Darstellung eines Bildes (B(k), B(k+1)) zeitlich aufeinanderfolgend erzeugten einfarbigen Teilbilder (B1(k)....B3(k+1+2/3) ist.

3. Verfahren nach einem der vorangehenden Ansprüche, bei dem zur Darstellung eines Bildes (B(k), H(k+1)) der Bildfolge (B(z)) drei einfarbige Teilbilder (B1(k)...(B2(k+1+2/3) in den Farben Rot, Grün und Blau erzeugt werden.

## Claims

1. A method of presenting an image sequence (B(z)), wherein an individual image (B(k), B(k+1)) is presented by a sequential presentation of monochrome partial images (B1(k)...B3(k+1)), comprising the following method steps:
- generating a motion-compensated image sequence (B(i)) having a higher image frequency from the image sequence (B(z)) to be presented,
- filtering the motion-compensated image sequence (B(i)) by means of a color filter device to obtain at least three partial image sequences (B1(i), B2(i), B3(i)) which are monochrome in each case,
- generating the partial image sequence (TB(i)), to be presented, from the individual partial image sequences (B1(i), B2(i), B3(i)) by cyclically selecting images of the partial image sequences in the time division multiplex method.

2. The method according to claim 1, wherein the image frequency of the motion-compensated image sequence (B(i)) is equal to n times the frequency of the image sequence (B(z)) to be presented, with n being the number of the monochrome partial images (B1(k)....B3(k+1+2/3)) which are sequentially generated for presenting an image (B(k), B(k+1)).

3. The method according to any of the preceding claims, wherein three monochrome partial images (B1(k)...(B2(k+1+2/3)) are generated in the colors red, green and blue for presenting an image (B(k), B(k+1)) of the image sequence (B(z)).

## Revendications

1. Procédé de représentation d'une suite d'images (B(z)) dans lequel une image individuelle (B(k), B(k+1)) est représentée par représentation temporellement successive d'images partielles monochromes (B1(k) ... B3(k+1)), comportant les étapes de procédé suivantes :
- génération d'une suite d'images compensée en mouvement (B(i)) présentant une fréquence d'image plus élevée à partir de la suite d'images à représenter (B(z)),
- filtrage de la suite d'images compensée en mouvement (B(i)) au moyen d'un dispositif de filtrage de couleur pour obtenir au moins trois suites d'images partielles monochromes respectivement (B1(i), B2(i), B3(i)),
- génération de la suite d'images partielles à représenter (TB(i)) à partir des suites d'images partielles individuelles (B1(i), B2(i), B3(i)) par sélection cyclique d'images des suites d'images partielles selon le procédé de multiplexage temporel.

2. Procédé selon la revendication 1, où la fréquence d'image de la suite d'images compensée en mouvement (B(i)) équivaut au n^{ième} multiple de la fréquence de la suite d'images à représenter (B(z)), n étant le nombre d'images partielles monochromes (B1(k)....B3(k+1+2/3)) générées de manière temporellement successive en vue de la représentation d'une image (B(k), B(k+1)).

3. Procédé selon l'une des revendications précédentes, où trois images partielles monochromes (B1(k)...(B2(k+1+2/3)) sont générées dans les couleurs rouge, vert et bleu en vue de la représentation d'une image (B(k), B(k+1)).
